# EUROPÄISCHE PATENTSCHRIFT

(11) **EP 4 078 103 B1**
(45) Veröffentlichungstag und Bekanntmachung des Hinweises auf die Patenterteilung: **06.08.2025**
(21) Anmeldenummer: 20811310.0
(22) Anmeldetag: 20.11.2020
(51) Int. Cl.: G01F 1/84

(54) **TRÄGEREINHEIT EINES MESSGERÄTES ZUM ERFASSEN EINES MASSEDURCHFLUSSES, EINER VISKOSITÄT, EINER DICHTE UND/ODER EINER DAVON ABGELEITETEN GRÖSSE EINES FLIESSFÄHIGEN MEDIUMS**
CARRIER UNIT OF A MEASURING DEVICE FOR DETECTING A MASS THROUGHFLOW, A VISCOSITY, A DENSITY, AND/OR A VARIABLE DERIVED THEREFROM, OF A FLOWABLE MEDIUM
UNITÉ DE SUPPORT D'UN DISPOSITIF DE MESURE POUR DÉTECTER UN DÉBIT MASSIQUE, UNE VISCOSITÉ, UNE DENSITÉ ET/OU UNE VARIABLE DÉRIVÉE DE CEUX-CI D'UN MILIEU FLUIDE

(30) Priorität: 16.12.2019 DE 102019134604
(43) Veröffentlichungstag der Anmeldung: 26.10.2022
(73) Patentinhaber: Endress+Hauser Flowtec AG, 4153 Reinach (CH)
(72) Erfinder: BITTO, Ennio, 4147 Aesch (CH); ZHU, Hao, 85354 Freising (DE); ANKLIN, Martin Josef, 4143 Dornach (CH); DRAHM, Wolfgang, 85435 Erding (DE)
(74) Vertreter: Endress + Hauser Group Services (Deutschland) AG+Co. KG
(86) Internationale Anmeldenummer: PCT/EP2020/082922
(87) Internationale Veröffentlichungsnummer: WO 2021/121867

(56) Entgegenhaltungen:
- DE-A1- 19 831 505
- DE-C2- 19 831 505
- JP-A- 2011 058 950
- US-A- 5 349 872
- US-A- 6 138 517
- US-A1- 2004 045 369
- US-A1- 2010 005 906
- US-A1- 2015 323 362
- US-B2- 7 100 456

## Beschreibung

Die Erfindung betrifft eine Trägereinheit eines Messgerätes zum Erfassen eines Massedurchflusses, einer Viskosität, einer Dichte und/oder einer davon abgeleiteten Größe eines fließfähigen Mediums, ein Messgerät zum Erfassen eines Massedurch-flusses, einer Viskosität, einer Dichte und/oder einer davon abgeleiteten Größe eines fließfähigen Mediums.

Feldgeräte der Prozessmesstechnik mit einem Messaufnehmer vom Vibrationstyp und besonders Coriolis-Durchflussmessgeräte sind seit vielen Jahren bekannt. Der grundsätzliche Aufbau eines solchen Messgerätes wird beispielsweise in der EP 1 807 681 A1 oder in US 6 138 517 A beschrieben, wobei auf den Aufbau eines gattungsgemäßen Feldgeräts im Rahmen der vorliegenden Erfindung auf diese Druckschrift vollumfänglich Bezug genommen wird.

Typischerweise weisen Coriolis-Durchflussmessgeräte zumindest ein oder mehrere schwingfähige Messrohre auf, welche mittels eines Schwingungserregers in Schwingung versetzt werden können. Diese Schwingungen übertragen sich über die Rohrlänge und werden durch die Art des im Messrohr befindlichen fließfähigen Mediums und dessen Durchflussgeschwindigkeit variiert. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln. Es sind Coriolis-Durchflussmessgeräte mit austauschbaren Einweg-Messrohranordnungen bekannt. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen Verbindungskörper, welcher dazu eingerichtet ist eine auswechselbare Messrohranordnung, umfassend dünnwandige Kunststoffrohre, aufzunehmen und zu stützen.

Der Erfindung liegt die Aufgabe zugrunde ein alternatives Einweg-Konzept für Coriolis-Durchflussmessgeräte bereitzustellen.

Die Aufgabe wird gelöst durch Trägereinheit nach Anspruch 1 und das Messgerät nach Anspruch 6.

Die erfindungsgemäße Trägereinheit weist eine Messrohranordnung eines Messgerätes zum Erfassen eines Massedurchflusses, einer Viskosität, einer Dichte und/oder einer davon abgeleiteten Größe eines fließfähigen Mediums auf, die Messanordnung umfassend:
- zwei insbesondere zueinander parallel verlaufende Messrohre zum Führen des fließfähigen Mediums,
   wobei die Messrohre jeweils einen Einlauf mit einer Einlaufrichtung und einen Auslauf mit einer Auslaufrichtung aufweisen,
   wobei die Messrohre zwischen Einlauf und Auslauf mindestens einmal gebogen sind;
- eine Koppleranordnung zum mechanischen Koppeln der beiden Messrohre,
   wobei die Koppleranordnung mindestens zwei Kopplerelemente aufweist,
   wobei mindestens ein Kopplerelement am Einlauf angeordnet ist,
   wobei mindestens ein Kopplerelement am Auslauf angeordnet ist;
- zwei Magnetanordnungen, welche an den Messrohren angeordnet sind,
   wobei an einem Messrohr genau eine Magnetanordnung angeordnet ist;
   wobei die Magnetanordnungen jeweils mindestens zwei Magnete aufweisen; und
- einen Verbindungskörper, welcher dazu eingerichtet ist die Messrohranordnung mit der Trägereinheit mechanisch lösbar zu verbinden,
   wobei der Verbindungskörper mit dem Einlauf und dem Auslauf der jeweiligen Messrohre verbunden ist.

Messrohranordnungen des Standes der Technik werden in der Regel mit einem einen Einlauf und Auslauf aufweisenden Trägerrohr verschweißt. Ein nachträgliches Auswechseln der Messrohranordnung ist gar nicht oder nur umständlich möglich. Durch das zusätzliche Bereitstellen eines Verbindungskörpers mit Montageflächen, über die eine form- und/oder kraftschlüssige Verbindung mit einer Trägereinheit realisiert werden kann eröffnet sich die Möglichkeit die Messrohranordnung des Messgerätes bei Bedarf auszuwechseln.

Ein zusätzlicher Verbindungskörper, welcher den Einlauf der Messrohranordnung mit dem Auslauf der Messrohranordnung verbindet, ermöglicht es zudem die gesamte Messrohranordnung, insbesondere den Teil, welcher dazu eingerichtet ist in Schwingungen versetzt zu werden, von der Umgebung zu entkoppeln. Alternativ könnte man Montageflächen an den Messrohren vorsehen. Dies ist aber nachteilig, da es durch die dann auf die Messrohre - welche möglichst dünn ausgebildet sind - wirkende Kräfte, zu Verformungen des Kanales zum Führen des Mediums führen kann, was strömungstechnisch nachteilig ist und einen immensen Einfluss auf die Schwingungseigenschaften der Messrohre hat.

Der Verbindungskörper kann zweiteilig ausgebildet sein, wobei ein erster Teil stoffschlüssig und der zweite Teil formschlüssig mit den jeweiligen Messrohren verbunden ist. Des Weiteren kann der Verbindungskörper oder der zweite Teil des Verbindungskörpers die Funktion eines Prozessanschlusses und/oder eines Strömungsverteilers übernehmen.

Es ist vorteilhaft, wenn der Verbindungskörper oder ein Teil des Verbindungskörpers massiv ausgebildet ist.

Vorteilhafte Ausgestaltung der Erfindung sind Gegenstand der Unteransprüche.

Eine Ausgestaltung sieht vor, dass die Einlaufrichtung und die Auslaufrichtung entgegengesetzt orientiert sind.

Dies bildet die Grundlage für eine vereinfachte Geometrie der Messrohre, was dazu führt, dass die Messrohre nicht nur montagefreundlich in die Trägereinheit einführbar, sondern auch einfach für Schlauch- und/oder Kunststoffrohrsysteme zugänglich sind.

Eine Ausgestaltung sieht vor, dass die Messrohre jeweils zwei Schenkel aufweisen, dessen jeweilige Längsachsen parallel zueinander verlaufen.

Eine Ausgestaltung sieht vor, dass die Messrohre jeweils eine Längsebene aufweisen, welche das Messrohr in zwei Seiten einteilt,
wobei die beiden Längsachsen der Schenkel eines Messrohres in der jeweiligen Längsebene verlaufen,
wobei die Magnetanordnungen an den einander abgewandten Seiten der Messrohre angeordnet sind.

Es sind Coriolis-Durchflussmessgeräte bekannt, bei denen die Magnete an einer der beiden sich zugewandten Seite der beiden Messrohre angebracht sind. So wird es beispielsweise in der WO 2019/017891 A1 und der EP 1 296 119 A1 gelehrt. Eine derartige Ausgestaltung hat zwar den Vorteil, dass die Anzahl an Spulen reduziert werden kann, jedoch hat es den Nachteil, dass entweder der Schwingungserreger und die Schwingungssensoren an der Messrohranordnung angebracht sein müssen und somit auch Teil der Einweganordnung sind, oder dass der Schwingungserreger und die Schwingungssensoren in einer Trägeranordnung angebracht sein müssen, welche sich im eingebauten Zustand der Messrohranordnung zwischen den beiden Messrohren erstreckt und somit das Einführen der Messrohranordnung in die Trägereinheit sterisch behindern kann. Erfindungsgemäß sind die Magnetanordnungen an den einander abgewandten Seiten der Messrohre angeordnet, so dass die Spulenanordnungen in den sich zugewandten Seitenflächen einer Aufnahme der Trägereinheit angeordnet werden können, und ein Einführen der Messrohranordnung durch den Benutzer vereinfacht wird.

Eine Ausgestaltung sieht vor, dass die Messrohre jeweils einen insbesondere metallischen Messrohrkörper mit einer Wandstärke kleiner 1 Millimeter, insbesondere kleiner 0,7 Millimeter und bevorzugt kleiner 0,25 Millimeter aufweisen.

Eine Ausgestaltung sieht vor, dass die Messrohre jeweils mindestens eine zumindest teilweise planar ausgebildete Anbringfläche aufweisen,
wobei der mindestens eine Magnet an der mindestens einen Anbringfläche angeordnet ist.

Die Anbringfläche kann direkt an den jeweiligen Messrohren angeordnet bzw. eingearbeitet sein, oder durch ein Zwischenstück, welches zwischen Messrohr und Magnet angeordnet ist bereitgestellt werden. Das Zwischenstück ist form- oder stoffschlüssig mit dem jeweiligen Messrohr verbunden.

Eine Ausgestaltung sieht vor, dass der Verbindungskörper insbesondere planare Montageflächen aufweist, zum mechanisch lösbaren Einbau der Messrohranordnung in eine Trägereinheit in einer, insbesondere durch die Montageflächen definierte Position.

Das nicht beanspruchte Messrohrsystem umfasst:
- eine Messrohranordnung; und
- ein Schlauch- und/oder Kunststoffrohrsystem, vorzugsweise zur Durchflussmessung bei automatisierten industriellen oder labortechnischen Anlagen,

wobei die Messrohranordnung an das Schlauch- und/oder Kunststoffrohrsystem angeschlossen ist und dazu eingerichtet ist die Durchflussgeschwindigkeit und/oder den Volumendurchfluss und/oder den Massedurchfluss des fließfähigen Mediums zu messen. Eine Ausgestaltung sieht vor, dass die Messrohranordnung und das Schlauch- und/oder Kunststoffrohrsystem in einem Behälter, insbesondere einem Sterilisationsbeutel angeordnet ist, welcher dazu ausgebildet eine Sterilität der Messrohranordnung und des Schlauch- und/oder Kunststoffrohrsystems bis zur Öffnung des Behälters aufrechtzuerhalten,
wobei das Messrohrsystem mittels Strahlensterilisation, vorzugsweise Gammastrahlensterilisation oder Elektronenstrahlensterilisation, Heißdampfsterilisation und/oder Gassterilisation sterilisiert ist.

In biomedizinischen Anwendungen besteht ein hoher Bedarf an einer automatisierten Prozessüberwachung. Für derartige Anwendungen sind sterilisierte Messkomponenten essentiell. Es ist daher vorteilhaft, wenn das Messrohrsystem insbesondere durch Gammastrahlensterilisation sterilisiert ist, und die Sterilität durch die Unterbringung des Messrohrsystems in einem Behälter aufrechterhalten wird. Als Behälter eignen sich vorzugsweise Kunststoffbeutel, welche Gammastrahlen und/oder Elektronenstrahlen im Wesentlichen vollständig durchlassen, jedoch undurchlässig für Verunreinigungen und Keime sind.

Eine Ausgestaltung sieht vor, dass mindestens eine Prozessüberwachungseinheit an das Schlauch- und/oder Kunststoffrohrsystem angeschlossen,
wobei die Prozessüberwachungseinheit einen Druckmesswandler, Temperatursensor, eine Waage, einen pH-Sensor, einen Dichtesensor, ein Durchflussmessgerät zur Ermittlung eines Massedurchflusses, eines Volumendurchflusses und/oder einer Durchflussgeschwindigkeit, einen Durchflussschalter, einen Füllstandssensor, einen Leitfähigkeitssensor, einen Konzentrationssensor, einen Sauerstoffsensor und/oder einen Trübungssensor umfasst.

Die erfindungsgemäße Trägereinheit eines Messgerätes zum Erfassen eines Massedurchflusses, einer Viskosität, einer Dichte und/oder einer davon abgeleiteten Größe eines fließfähigen Mediums, umfassend:
- einen Trägereinheitskörper zum Befestigen der Messanordnung,
   wobei der Trägereinheitskörper eine Aufnahme für die Messrohranordnung aufweist,
   wobei der Trägereinheitskörper mindestens zwei gegenüberliegende Seitenflächen aufweist, welche die Aufnahme quer zur Längsrichtung der Messrohranordnung beschränkt;
- mindestens ein Schwingungserreger, welcher dazu eingerichtet ist, die Messrohranordnung zu Schwingungen anzuregen,
   wobei der mindestens eine Schwingungserreger an einer der gegenüberliegenden Seitenflächen oder zwischen den Rohren angeordnet ist; und
- mindestens zwei Schwingungssensoren, welche dazu eingerichtet sind, die Auslenkung der Schwingungen der Messrohranordnung zu erfassen,
   wobei die Schwingungssensoren an den gegenüberliegenden Seitenflächen angeordnet sind,
   wobei die Schwingungssensoren in Längsrichtung versetzt zum Schwingungserreger angeordnet sind.

Eine Ausgestaltung sieht vor, dass ein Schwingungssensor zwei Spulenvorrichtungen aufweist, welche in Längsrichtung des Trägereinheitskörpers, insbesondere in Längsrichtung der Aufnahme versetzt zueinander angeordnet sind.

Eine Ausgestaltung sieht vor, dass der Schwingungserreger und der Schwingungssensor jeweils mindestens eine Spulenvorrichtung aufweisen,
wobei die Spulenvorrichtungen jeweils in einer Vertiefung im Trägereinheitskörper angeordnet sind.

Dies ermöglicht ein Einführen der Messrohranordnung in die Aufnahme der Trägereinheit ohne sterische Behinderung durch die Spulenvorrichtung.

Eine Ausgestaltung sieht vor, dass die Spulenvorrichtungen mindestens eine Leiterplattenspule umfasst.

Leiterplattenspulen als Komponenten des Schwingungserregers und/oder Schwingungssensoren ist bereits bekannt. Vorteilhaft ist, dass das Versenken der Leiterplattenspulen in die Seitenflächen der Aufnahme konstruktiv einfach realisierbar ist.

Erfindungsgemäß weist der Trägereinheitskörper eine Stirnfläche auf, in der die Aufnahme angeordnet ist, wobei die Stirnfläche als Auflagefläche für einen Verbindungskörper der Messrohranordnung ausgebildet ist. Trägerkörpereinheiten mit Auflageflächen, auf welche der Verbindungskörper aufliegen kann ist besonders vorteilhaft gegenüber Trägereinheiten, welche die Messrohranordnung einspannen. Eine derartige Ausgestaltung ist beispielsweise aus der WO 2019/017891 A1 bekannt. Im dem Falle ist die Messrohranordnung so in eine Trägereinheit mit Anbringungsteilen angeordnet, dass die Anbringungsteile eine Kraft in Längsrichtung einer Basisplatte bewirken und die Messrohranordnung nicht nur formschlüssig, sondern auch kraftschlüssig in Position halten.

Eine Auflagefläche ist eine Stützfläche, auf der etwas aufliegt oder auf die etwas aufgelegt werden kann. Dabei muss das Lot der Auflagefläche nicht zwingend in Gravitationsrichtung zeigen. Durch das Aufbringen einer Kraft mit einer Kraftrichtung parallel zum Lot wird die Messrohranordnung besser in der Trägereinheit fixiert und gegen störende Einflüsse entkoppelt.

Erfindungsgemäß ist an der Stirnfläche eine Fixiervorrichtung angeordnet, welche dazu eingerichtet ist eine kraftschlüssige Verbindung zwischen Messrohranordnung, insbesondere Verbindungskörper und Trägereinheitskörper herzustellen, wobei die kraftschlüssige Verbindung über eine Kraftwirkung der Fixiervorrichtung auf den Verbindungskörper in Längsrichtung der Aufnahme realisiert wird.

Vorteilhaft an der Ausgestaltung ist, dass durch eine zusätzliche Fixiervorrichtung eine bessere Entkopplung der schwingenden Messrohre von der Umgebung realisiert werden kann. Die Fixiervorrichtung ist dazu eingerichtet die Messrohranordnung kraftschlüssig in der durch die Montageflächen vorgegebenen Position zu halten.

Als Fixiervorrichtung eignen sich Schraubelemente, Klemmenelemente, Einrastelemente oder eine Einspannvorrichtung.

Eine Ausgestaltung sieht vor, dass die mindestens zwei parallelen Seitenflächen jeweils eine Führung aufweisen, welche sich senkrecht zur Längsrichtung der Aufnahme erstrecken und welche dazu ausgebildet sind, eine formschlüssige Verbindung zwischen Verbindungskörper der Messrohranordnung und Trägereinheitskörper zu formen. Vorteilhaft an der Ausgestaltung ist die Vereinfachung der Montage durch eine in den gegenüberliegenden Seitenflächen eingebrachte Führung, welche derart ausgestaltet ist, dass der Verbindungskörper formschlüssig in die Führung eingeführt werden kann. Dadurch wird zusätzlich der Abstand zwischen Magnet- und Spulenvorrichtung reproduzierbar einstellbar.

Ein erfindungsgemäßes Messgerät zum Erfassen eines Massedurchflusses, einer Viskosität, einer Dichte und/oder einer davon abgeleiteten Größe eines fließfähigen Mediums, umfassend:
- die Messanordnung,
- die erfindungsgemäße Trägereinheit,
   wobei die Messrohranordnung in der Aufnahme der Trägereinheit angeordnet ist und mechanisch lösbar mit der Trägereinheit verbunden ist;
- eine Mess- und/oder Betriebsschaltung,
   wobei die Mess- und/oder Betriebsschaltung dazu eingerichtet ist, die Schwingungssensoren und den Schwingungserreger zu betreiben, und mit diesen verbunden ist,
   wobei die elektronische Mess- und/oder Betriebsschaltung weiter dazu eingerichtet ist, Massedurchflussmesswerte, Viskositätswerte und/oder Dichtemesswerte und/oder Temperaturmesswerte und/oder Diagnosemesswerte und/oder Werte einer davon abgeleiteten Größe zu ermitteln und bereitzustellen.

Eine nicht beanspruchte Ausgestaltung sieht vor, dass die Mess- und/oder Betriebsschaltung dazu eingerichtet ist, zu Bestimmen an welcher Spulenvorrichtung das erfasste Magnetfeld am größten ist und die mittels der bestimmten Spulenvorrichtung ermittelten Messwerte für die Bestimmung des Massedurchflusses, der Viskosität, der Dichte und/oder der davon abgeleiteten Größe der fließfähigen Mediums zu verwenden.

Es ist vorteilhaft, wenn das Messgeräte mehrere Spulenanordnungen umfasst, welche unabhängig voneinander dazu eingerichtet sind Schwingungseigenschaften der Messrohre zu ermitteln. Diese sind erfindungsgemäß in Längsrichtung der Aufnahme versetzt zueinander angeordnet. Dies ermöglicht das Verwenden von Messrohranordnungen mit abweichenden Magnetpositionen. Dies kann beispielsweise durch unterschiedliche Nennweiten oder Längen der Messrohre bedingt sein.

Die und/oder Betriebsschaltung ist dazu eingerichtet zu erkennen, an welcher Spule das größte Magnetfeld ermittelt wird und dieses ermittelten Messsignale für die Bestimmung der zu ermittelten Durchflussmessgröße zu verwenden. Vorteilhaft ist, dass eine Trägereinheit somit für eine Vielzahl an Messrohranordnungen mit unterschiedlichen Geometrien, Nennweiten, Längen und Magnetpositionen geeignet ist.

Eine nicht beanspruchte Ausgestaltung sieht vor, dass der Verbindungskörper der

Messrohranordnung auf eine Auflagefläche des Trägereinheitskörpers aufliegt,
wobei die Auflagefläche ein Lot aufweist mit einer Richtung parallel zur Längsrichtung der Aufnahme,
wobei der Trägereinheitskörper eine Fixiervorrichtung aufweist, welche dazu eingerichtet ist die Messrohranordnung, insbesondere den Verbindungskörper kraftschlüssig mit dem Trägereinheitskörper zu verbinden,
wobei die kraftschlüssige Verbindung durch eine Kraftwirkung in Richtung der Längsrichtung der Aufnahme realisiert ist.

Die Erfindung wird anhand der nachfolgenden Figuren näher erläutert. Es zeigt:
Fig. 1: eine Ausgestaltung der Messrohranordnung
Fig. 2: eine Ausgestaltung des erfindungsgemäßen Messgerätes;
Fig. 3: eine perspektivische Ansicht auf eine Ausgestaltung der erfindungsgemäßen Trägereinheit und eine Messrohranordnungen;
Fig. 4: eine Ausgestaltung des nicht beanspruchten Messrohrsystemes;
Fig. 5: eine Nahansicht auf eine Ausgestaltung der Koppleranordnung;
Fig. 6: eine Messrohranordnung, welche in eine Aufnahme einer Trägereinheit eingesetzt wird; und
Fig. 7: eine Nahansicht auf eine Ausgestaltung des Magnethalters mit angebrachten Magneten.

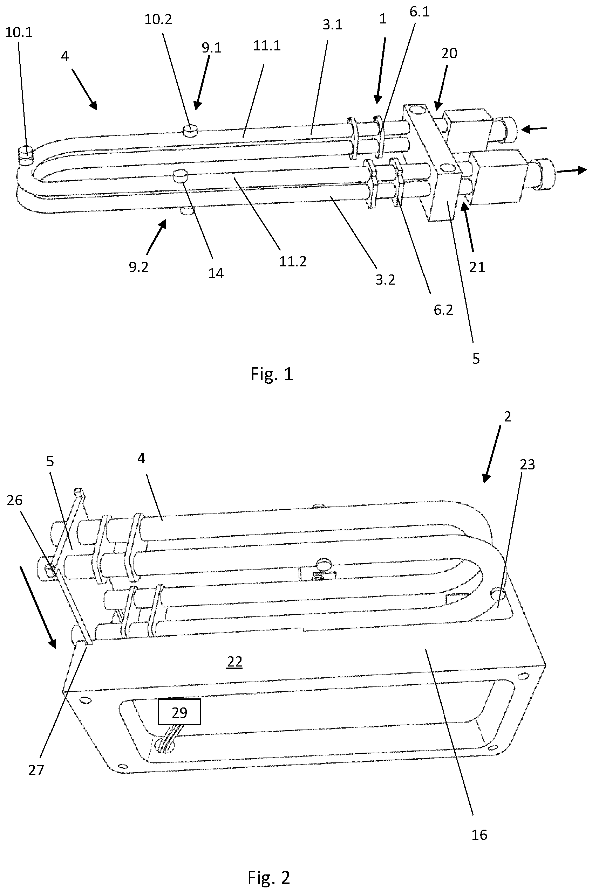

Die Fig. 1 zeigt eine Ausgestaltung der Messrohranordnung 4. Die Messrohranordnung 4 ist dazu geeignet in ein Messgerät auswechselbar eingesetzt zu werden. Dafür sind nur einzelne Komponenten des Schwingungserregers und der Schwingungssensoren, in dem Fall die jeweiligen Magnetanordnungen 9.1, 9.2 an der Messrohranordnung 4 angebracht. Die weiteren Komponenten sind in einer nicht abgebildeten Trägereinheit, insbesondere in der Aufnahme angeordnet, welche für das Aufnehmen der Messrohranordnung 4 geeignet ist. Die Messrohranordnung 4 umfasst zwei gebogenen, parallel zueinander verlaufende Messrohre 3.1, 3.2, welche über eine Koppleranordnung 1, bestehend aus vier Kopplungselementen 6, und über einen Verbindungskörper 5 miteinander verbunden sind. Zwei Kopplungselemente 6.1 sind im Einlauf 20 und zwei Kopplungselemente 6.2 sind im Auslauf der jeweiligen Messrohre 3.1, 3.2 stoffschlüssig angebracht. Im Einlauf 20 und im 21 sind jeweils ein Strömungsteiler angeordnet, welcher einen Prozessanschluss aufweist zum Verbinden mit einem Schlauch- und/oder Kunststoffrohrsystem. Die Messrohre 3.1, 3.2 sind so geformt, dass die Strömungsrichtung, dargestellt durch zwei Pfeile, im Einlauf 20 entgegengesetzt zur Strömungsrichtung im Auslauf 21 orientiert ist. Gemäß einer weiteren Ausgestaltung kann ein Strömungsteilerkörper statt zwei separate Strömungsteiler vorgesehen sein, welcher auf den Einlauf 20 und Auslauf 21 aufgeschoben wird und mit dazu beiträgt das Messrohranordnung 4 nach dem Einbau in die Trägereinheit von der Umgebung zu entkoppeln. Die einzelnen Kopplungselemente 6 sind plattenförmig ausgebildet und sind ein- oder zweiteilig. Die Kopplungselemente können die Messrohre jeweils vollständig oder nur teilweise umgreifen. Die Messrohre 3.1, 3.2 sind U-förmig ausgebildet, d.h. sie weisen jeweils zwei im Wesentlichen parallel zueinander verlaufende Schenkel auf, die über einen gebogenen Teilabschnitt verbunden sind. An jedem Messrohre 3.1, 3.2 ist eine Magnetanordnung 9.1, 9.2 angeordnet. Im gebogenen Teilabschnitt ist ein Magnet 10.1 der Magnetanordnung 9.1 angeordnet, welcher eine Komponente des Schwingungserregers bildet. In den jeweiligen Schenkeln sind jeweils ein Magnet 10.2 angebracht, welcher ein Teil des Schwingungserregers bildet. Die Magnete 10 sind an Anbringflächen 14 angebracht. Die Anbringflächen 14 befinden sich in der Ausgestaltung an den jeweiligen Messrohren 3.1, 3.2.

Die Fig. 2 zeigt eine Ausgestaltung des erfindungsgemäßen Messgerätes 2. Eine Messrohranordnung 4 ist teilweise in eine Aufnahme 23 einer Trägereinheit 16 eingeführt. Ein Pfeil deutet die Einführrichtung an. Diese verläuft in der Ausgestaltung senkrecht zu einer Längsrichtung der Aufnahme 23. Gemäß einer weiteren vorteilhaften Ausgestaltung (nicht abgebildet) Die Trägereinheit 16 weist eine Mess- und/oder Betriebsschaltung 29 auf, welche mit den Schwingungserregern und Schwingungssensoren, insbesondere mit den jeweiligen Spulensystemen verbunden und dazu eingerichtet sind ein zeitlich wechselndes Magnetfeld zu erzeugen und/oder zu erfassen. Die Trägereinheit 16 weist einen Trägereinheitskörper 22 auf, in der sich die Aufnahme 23 befindet. Der Verbindungskörper 5 der Messrohranordnung 4 weist Montageflächen 26 auf, welche dazu dienen die Messrohranordnung 4 in eine vorgegebene Position in der Trägereinheit 16 anzuordnen. Gemäß der abgebildeten Ausgestaltung zeigt das Lot der Montagefläche 26 senkrecht zur Längsrichtung der Messrohranordnung 4. Gemäß einer weiteren vorteilhaften Ausgestaltung ist zeigt das Lot der Montagefläche 26 in Richtung der Längsrichtung der Messrohranordnung 4. Die mit der Montagefläche 26 des Verbindungskörpers 5 in Kontakt stehende Fläche des Trägereinheitskörpers 22 ist die Auflagefläche 27.

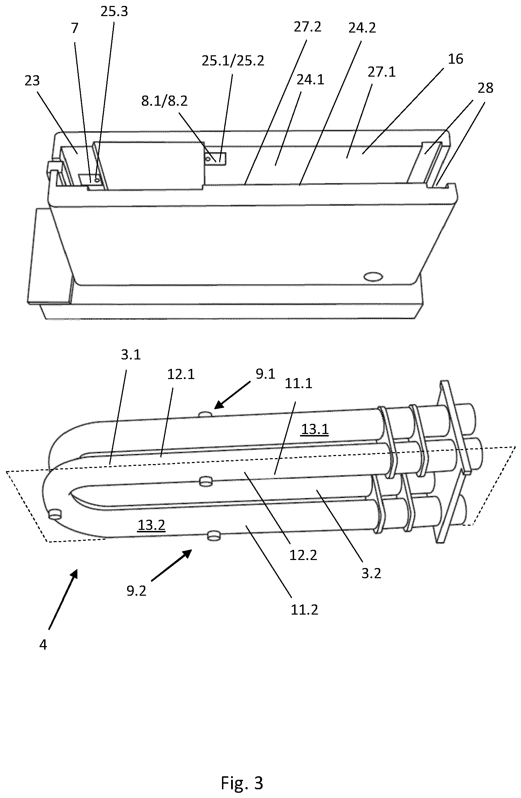

Die Fig. 3 zeigt eine perspektivische Ansicht auf eine Ausgestaltung der erfindungsgemäßen Trägereinheit 16 und der Messrohranordnungen 4. Die Trägereinheit 16 weist zwei parallel zueinander orientierte Seitenflächen 24.1, 24.2 auf, welche die Aufnahme 23 quer zur Längsrichtung der Aufnahme begrenzen. In den Seitenflächen 24.1, 24.2 sind die Spulenvorrichtungen 25.1, 25.2 der Schwingungssensoren 8.1, 8.2 und die Spulenvorrichtung 25.3 des Schwingungserregers 7 angeordnet. Die Spulenvorrichtungen 25.1, 25.2 sind in Längsrichtung der Aufnahme zur Spulenvorrichtung 25.3 angeordnet. Alle drei Spulenvorrichtungen 25.1, 25.2, 25.3 befinden sich in einer Spulenebene. Des Weiteren sind die drei Spulenvorrichtungen 25.1, 25.2, 25.3 als Plattenspule ausgebildet und in die Seitenfläche 24.1 versenkt. An der Seitenfläche 24.2 sind drei Spulenvorrichtungen im Wesentlich gegenüber von den drei Spulenvorrichtungen 25.1, 25.2, 25.3 angeordnet. In den beiden Seitenflächen 24.1, 24.2 ist jeweils eine Führung 28 eingearbeitet, welche sich senkrecht zur Längsrichtung der Aufnahme 23 und parallel zur Spulenebene erstreckt. Gemäß der abgebildeten Ausgestaltung erstreckt sich die Aufnahme über zwei Stirnseiten der Aufnahme 23. Dies ermöglicht ein Einführen der Messrohranordnung 4 senkrecht zur Längsrichtung der Messrohranordnung 4. Gemäß einer weiteren vorteilhaften Ausgestaltung erstreckt sich die Aufnahme ausschließlich über eine Stirnseite. In dem Fall ist die Messrohranordnung 4 in Längsrichtung der Messrohranordnung 4 in die Trägereinheit 16 einzuführen.

Die abgebildete Messrohranordnung 4 weist zwei gebogene Messrohre 3.1, 3.2 auf, welche jeweils einen Messrohrkörper 13.1, 13.2 umfassen, der aus einem Werkstoff gebildet ist, der ein Metall, eine Keramik, einen Kunststoff und/oder ein Glas umfasst. Eine Längsebene, in welcher die Längsachsen der Schenkel 11.1, 11.2 verlaufen, teilt das jeweilige Messrohr 3.1, 3.2 in zwei Seiten 12.1, 12.2 ein. An den sich abgewandten Seiten 12.2 sind die Magnetanordnungen 9.1, 9.2 angebracht. Die abgebildete Messrohranordnung 4 unterscheidet sich von der Messrohranordnung 4 der Fig. 1 dadurch, dass im Einlauf und Auslauf keine Prozessanschluss und/oder Strömungsteiler angeordnet ist. Es sind Kunststoff-Strömungsteiler bekannt welche in das an die Messrohranordnung 4 anzubringende Schlauch- und/oder Kunststoffrohrsystem integriert ist.

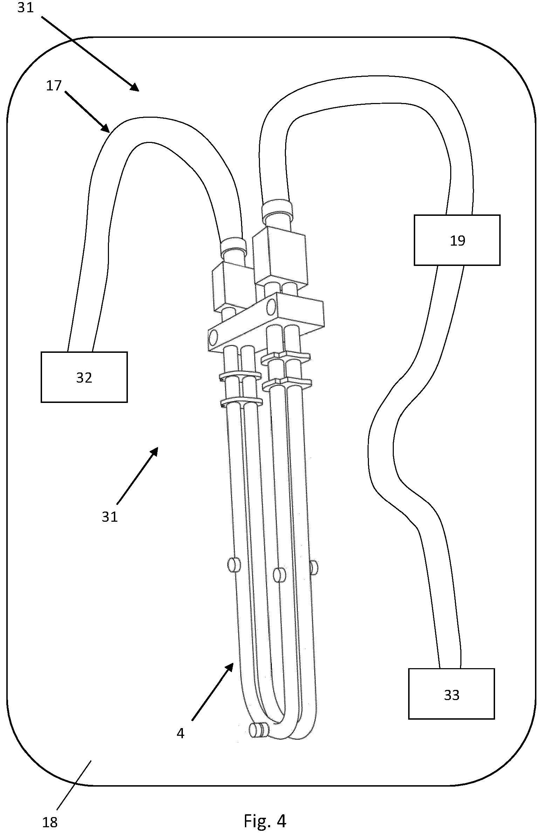

Die Fig. 4 zeigt eine Ausgestaltung des nicht beanspruchten Messrohrsystems 31. Eine Messrohranordnung 4 ist über die Prozessanschlüsse mit einem Schlauch- und/oder Kunststoffrohrsystem 17 verbunden. Im Schlauch- und/oder Kunststoffrohrsystem 17 ist eine Prozessüberwachungseinheit 19 integriert. Das Schlauch- und/oder Kunststoffrohrsystem 17 weist einen Bioprozessbeutel 33 und ein Anschlusselemente 32 auf, mit dem das Messrohrsystem 31 an eine Prozessleitung angeschlossen werden kann. Das gesamte Messrohrsystem 31 befindet sich in einem Behälter 18. In dem Fall handelt es sich bei dem Behälter 18 um einen Sterilisationsbeutel, welcher für Sterilisationsverfahren basierend auf ionischer Strahlung geeignet ist.

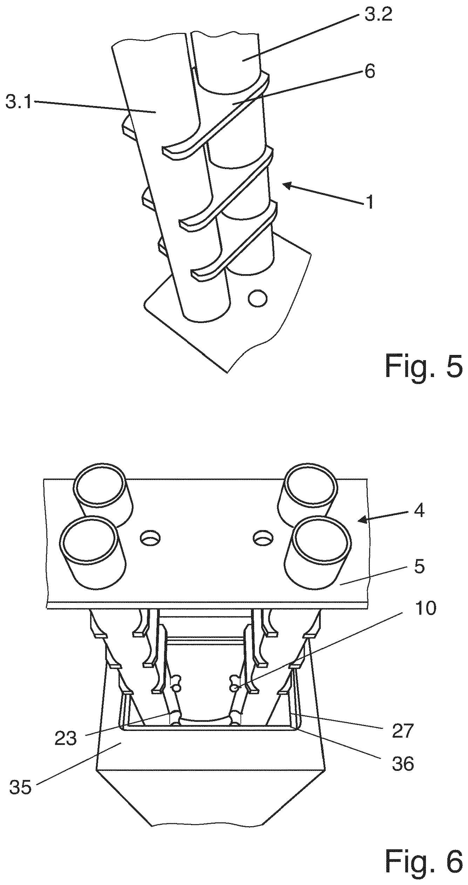

Die Fig. 5 zeigt eine Nahansicht auf eine Ausgestaltung der Koppleranordnung 1 mit drei Kopplerelementen 6, welche im Einlaufbereich oder Auslaufbereich zwischen zwei parallel verlaufende Messrohre 3.1, 3.2 angeordnet sind und diese miteinander verbinden. Die jeweiligen Kopplerelemente 6 sind plattenförmig ausgebildet und weisen jeweils zwei Öffnungen aufweisen, durch welche jeweils eines der beiden Messrohre 3.1, 3.2 verläuft. Die Kopplerelemente 6 umgreifen die Messrohre 3.1, 3.2 nur soweit, dass die Kopplerelemente 6 ein erste das Messrohre 3.1 und eine zweite das Messrohre 3.2 senkrecht zur Fließrichtung begrenzende Bezugsebene nicht überschreitet. Eine Längsebene der Messrohranordnung, in welcher auch die Längsachsen der Messrohre 3.1, 3.2 liegen, schneidet die Bezugsebene senkrecht. Eine derartige Ausgestaltung vermeidet überstehende Kopplerelemente 6, welche beim Einführen der Messrohranordnung in die Trägereinheit mit dem Trägerkörper selbst oder anderen Teilen der Anordnung kollidieren können. Die Kopplerelemente 6 sind stoffschlüssig mit den Messrohren 3.1, 3.2 insbesondere mittels einer Löverbindung verbunden.

Die Fig. 6 zeigt eine Messrohranordnung 4, welche in eine Aufnahme 23 einer Trägereinheit 16 eingesetzt wird. Die abgebildete Trägereinheit 16 weist eine Stirnseite 35 auf, in der die Aufnahme 23 und die Auflagefläche 27 für den Verbindungskörper 5 der Messrohranordnung 4 angeordnet ist. Anders als der in der Fig. 3 abgebildeten Ausgestaltung der Trägereinheit 16 erstreckt sich die Aufnahme 23 ausschließlich an einer Stirnseite 35 der Trägereinheit 16, zudem weist die Aufnahme 23 keine Führung auf. Stattdessen weist die Aufnahme 23 eine Vertiefung 36 auf, welche auch die Auflagefläche 27 umfasst, und die im Wesentlichen komplementär zum Verbindungskörper 5 der Messrohranordnung 4 ausgebildet ist. Die Messrohranordnung 4 wird durch eine in Längsrichtung der Messrohranordnung 4 gerichtete Bewegung in die Aufnahme 23 der Trägereinheit 16 eingeführt. Im eingebauten Zustand bedindet sich die Montagefläche der Messrohranordnung 4 in Kontakt mit der Auflagefläche 27 der Trägereinheit 16.

Die abgebildeten Ausgestaltung der Messrohranordnung 4 weist Messrohre 3.1, 3.2 auf mit jeweils einer Messrohraußenfläche, wobei die jeweilige Messrohraußenfläche durch zwei die Messrohraußenflächen im Einlaufbereich und im Auslaufbereich tangierenden, parallel zueinander verlaufenden Bezugsebenen begrenzt werden. Ein Magnet des Schwingungserregers oder des Schwingungssensors ist ausschließlich derart an den jeweiligen Messrohren 3.1, 3.2 angebracht, dass er die zwei Bezugsebenen nicht überschreitet.

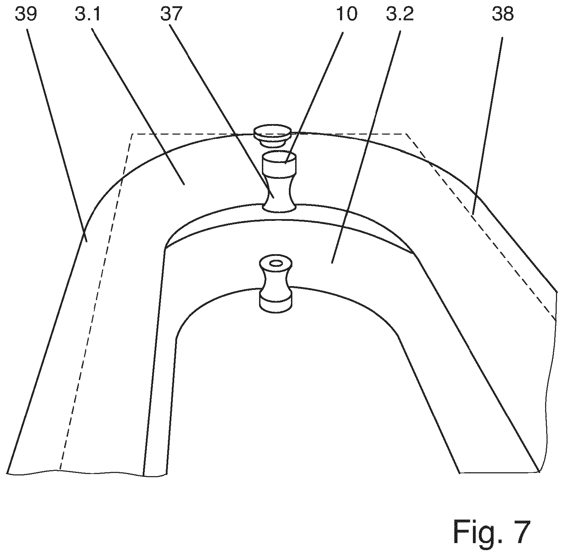

Die Fig. 7 zeigt eine Nahansicht auf eine Ausgestaltung eines im gebogenen Teilabschnitt des Messrohres 3.1, 3.2 angeordneten Magnethalters 37 mit angebrachten Magneten 10. Der Magnethalter 37 ist stoffschlüssig mit dem jeweiligen Messrohr 3.1, 3.2 verbunden. Der Magnet 10 ist nicht direkt mit dem Messrohr 3.1, 3.2 verbunden, sondern über den Magnethalter 37, mit welchem der Magnet 10 stoffschlüssig verbunden ist. Der Magnethalter 37 ist vorzugsweise aus einem nichtmagnetischen Werkstoff gefertigt.

Die beiden eine Messrohranordnung bildende Messrohre 3.1, 3.2 weisen jeweils eine Außenfläche 39 auf. Im Einlaufbereich und Auslaufbereich wird die Außenfläche des Messrohres 3.1, 3.2 durch zwei parallel zueinander verlaufende Bezugsebenen 38.1, 38.2 tangiert. Eine die Längsachse des Messrohres im Einlaufbereich und die Längsachse des Messrohres im Auslaufbereich schneidende Längsebene verläuft parallel zu den beiden Bezugsebenen 38.1, 38.2. Die beiden Bezugsebenen 38.1, 38.2 begrenzen einen Bereich in dem sich der Magnetträger 37 mit dem angebrachten Magneten 10 befinden darf. Somit werden überstehende Komponenten der Messrohranordnung 4 vermieden, was zu einer sicheren Montage der Messrohranordnung 4 in die Trägereinheit führt.

### Bezugszeichenliste

Koppleranordnung 1
Messgerät 2
Messrohr 3
Messrohranordnung 4
Verbindungskörper 5
Kopplungselement 6
Schwingungserreger 7
Schwingungssensor 8
Magnetanordnung 9
Magnet 10
Schenkel 11
Seite 12
Messrohrkörper 13
Anbringfläche 14
Mess- und/oder Betriebsschaltung 15
Trägereinheit 16
Schlauch- und/oder Kunststoffrohrsystem 17
Behälter 18
Prozessüberwachungseinheit 19
Einlauf 20
Auslauf 21
Trägereinheitskörper 22
Aufnahme 23
Seitenfläche 24
Spulenvorrichtung 25
Motagefläche 26
Auflagefläche 27
Führung 28
Mess- und/oder Betriebsschaltung 29
Prozessanschluss 30
Messrohrsystem 31
Anschlusselement 32
Bioprozessbeutel 33
Magnethalter 34
Stirnfläche 35
Vertiefung 36
Magnethalter 37
Bezugsebene 38
Außenfläche 39

## Patentansprüche

1. Trägereinheit (16) eines Messgerätes (2) zum Erfassen eines Massedurchflusses, einer Viskosität, einer Dichte und/oder einer davon abgeleiteten Größe eines fließfähigen Mediums, umfassend:
- einen Trägereinheitskörper (22) zum Befestigen einer Messrohranordnung (4) des Messgerätes (2), welche Messrohranordnung (4) umfasst:
-- zwei insbesondere zueinander parallel verlaufende Messrohre (3.1, 3.2) zum Führen des fließfähigen Mediums,
wobei die Messrohre (3.1, 3.2) jeweils einen Einlauf (20) mit einer Einlaufrichtung und einen Auslauf (21) mit einer Auslaufrichtung aufweisen,
wobei die Messrohre (3.1, 3.2) zwischen Einlauf (20) und Auslauf (21) mindestens einmal gebogen sind;
-- eine Koppleranordnung (1) zum mechanischen Koppeln der beiden Messrohre (3.1, 3.2),
wobei die Koppleranordnung (1) mindestens zwei Kopplerelemente (6.1, 6.2) aufweist,
wobei mindestens ein Kopplerelement (6.1) am Einlauf (20) angeordnet ist,
wobei mindestens ein Kopplerelement (6.2) am Auslauf (21) angeordnet ist;
-- zwei Magnetanordnungen (9.1, 9.2), welche an den Messrohren (3.1, 3.2) angeordnet sind,
wobei an einem Messrohr (3.1, 3.2) genau eine Magnetanordnung (9.1, 9.2) angeordnet ist;
wobei die Magnetanordnungen (9.1, 9.2) jeweils mindestens zwei Magnete (10.1, 10.2) aufweisen; und
-- einen Verbindungskörper (5), welcher dazu eingerichtet ist die Messrohranordnung (4) mit der Trägereinheit (16) mechanisch lösbar zu verbinden,
wobei der Verbindungskörper (5) mit dem Einlauf (20) und dem Auslauf (21) der jeweiligen Messrohre (3.1, 3.2) verbunden ist;
wobei der Trägereinheitskörper (22) eine Aufnahme (23) für die Messrohranordnung (4) aufweist,
wobei der Trägereinheitskörper (22) mindestens zwei gegenüberliegende Seitenflächen (24.1, 24.2) aufweist, welche die Aufnahme (23) quer zur Längsrichtung der Messrohranordnung (4) oder zur Längsrichtung des Trägereinheitskörpers (22) beschränken,
wobei der Trägereinheitskörper (22) eine Stirnfläche (35) aufweist, in der die Aufnahme (23) angeordnet ist,
wobei die Stirnfläche (35) als Auflagefläche (27) für einen Verbindungskörper (5) der Messrohranordnung (4) ausgebildet ist;
- mindestens einen Schwingungserreger (7), welcher dazu eingerichtet ist, die Messrohranordnung (4) zu Schwingungen anzuregen,
wobei der mindestens eine Schwingungserreger (7) an einer der gegenüberliegenden Seitenflächen (24.1, 24.2) angeordnet ist; und
- mindestens zwei Schwingungssensoren (8.1, 8.2), welche dazu eingerichtet sind, die Auslenkung der Schwingungen der Messrohranordnung (4) zu erfassen,
wobei die Schwingungssensoren (8.1, 8.2) an den gegenüberliegenden Seitenflächen (24.1, 24.2) angeordnet sind,
wobei die Schwingungssensoren (8) in Längsrichtung versetzt zum Schwingungserreger (7) angeordnet sind,
**dadurch gekennzeichnet, dass** an der Stirnfläche (35) eine Fixiervorrichtung angeordnet ist, welche dazu eingerichtet ist eine kraftschlüssige Verbindung zwischen Messrohranordnung (4) und Trägereinheitskörper (22) herzustellen,
wobei die kraftschlüssige Verbindung über eine Kraftwirkung der Fixiervorrichtung auf den Verbindungskörper (5) in Längsrichtung der Aufnahme (23) realisiert wird.

2. Trägereinheit (16) nach Anspruch 1,
wobei ein Schwingungssensor (8) zwei Spulenvorrichtungen (25.1, 25.2) aufweist, welche in Längsrichtung des Trägereinheitskörpers (22) versetzt zueinander angeordnet sind.

3. Trägereinheit (16) nach Anspruch 1 und/oder 2,
wobei der Schwingungserreger (7) und der Schwingungssensor (8) jeweils mindestens eine Spulenvorrichtung (25) aufweisen,
wobei die Spulenvorrichtungen (25) jeweils in einer Vertiefung im Trägereinheitskörper (22) angeordnet sind.

4. Trägereinheit (16) nach Anspruch 3,
wobei die Spulenvorrichtungen (25) mindestens eine Leiterplattenspule umfasst.

5. Trägereinheit (16) nach mindestens einem der Ansprüche 1 bis 4,
wobei die zwei gegenüberliegende Seitenflächen (24.1, 24.2) jeweils eine Führung (28) aufweisen, welche sich senkrecht zur Längsrichtung der Aufnahme (23) erstrecken und welche dazu ausgebildet sind, eine formschlüssige Verbindung zwischen Verbindungskörper (5) der Messrohranordnung (4) und Trägereinheitskörper (22) zu formen.

6. Messgerät (2) zum Erfassen eines Massedurchflusses, einer Viskosität, einer Dichte und/oder einer davon abgeleiteten Größe eines fließfähigen Mediums, umfassend:
- eine Messrohranordnung (4), welche Messrohranordnung umfasst:
-- zwei insbesondere zueinander parallel verlaufende Messrohre (3.1, 3.2) zum Führen des fließfähigen Mediums,
wobei die Messrohre (3.1, 3.2) jeweils einen Einlauf (20) mit einer Einlaufrichtung und einen Auslauf (21) mit einer Auslaufrichtung aufweisen,
wobei die Messrohre (3.1, 3.2) zwischen Einlauf (20) und Auslauf (21) mindestens einmal gebogen sind;
-- eine Koppleranordnung (1) zum mechanischen Koppeln der beiden Messrohre (3.1, 3.2),
wobei die Koppleranordnung (1) mindestens zwei Kopplerelemente (6.1, 6.2) aufweist,
wobei mindestens ein Kopplerelement (6.1) am Einlauf (20) angeordnet ist,
wobei mindestens ein Kopplerelement (6.2) am Auslauf (21) angeordnet ist;
-- zwei Magnetanordnungen (9.1, 9.2), welche an den Messrohren (3.1, 3.2) angeordnet sind,
wobei an einem Messrohr (3.1, 3.2) genau eine Magnetanordnung (9.1, 9.2) angeordnet ist;
wobei die Magnetanordnungen (9.1, 9.2) jeweils mindestens zwei Magnete (10.1, 10.2) aufweisen; und
-- einen Verbindungskörper (5), welcher dazu eingerichtet ist die Messrohranordnung (4) mit einer Trägereinheit (16) mechanisch lösbar zu verbinden,
wobei der Verbindungskörper (5) mit dem Einlauf (20) und dem Auslauf (21) der jeweiligen Messrohre (3.1, 3.2) verbunden ist;
- die Trägereinheit (16) nach einem der Ansprüche 1 bis 5,
wobei die Messrohranordnung (4) in der Aufnahme (23) der Trägereinheit (16) angeordnet ist und mechanisch lösbar mit der Trägereinheit (16) verbunden ist;
- eine Mess- und/oder Betriebsschaltung (29),
wobei die Mess- und/oder Betriebsschaltung (29) dazu eingerichtet ist, den Schwingungssensor (8) und den Schwingungserreger (7) zu betreiben, und mit diesen verbunden ist,
wobei die elektronische Mess- und/oder Betriebsschaltung (29) weiter dazu eingerichtet ist, Massedurchflussmesswerte, Viskositätswerte und/oder Dichtemesswerte und/oder Temperaturmesswerte und/oder Diagnosemesswerte und/oder Werte einer davon abgeleiteten Größe zu ermitteln und bereitzustellen.

7. Messgerät nach Anspruch 6,
wobei die Trägereinheit mindestens zwei in Längsrichtung der Aufnahme versetzte Schwingungssensoren (8.1, 8.2), mit jeweils einer Spulenvorrichtung (25) aufweist,
wobei die Mess- und/oder Betriebsschaltung (29) dazu eingerichtet ist, zu Bestimmen an welcher Spulenvorrichtung (25) das erfasste Magnetfeld am größten ist und die mittels der bestimmten Spulenvorrichtung (25) ermittelten Messwerte für die Bestimmung des Massedurchflusses, der Viskosität, der Dichte und/oder der davon abgeleiteten Größe der fließfähigen Mediums zu verwenden.

8. Messgerät nach einem der Ansprüche 6 bis 7,
wobei die Einlaufrichtung und die Auslaufrichtung entgegengesetzt orientiert sind.

9. Messgerät nach einem der Ansprüche 6 bis 8,
wobei die Messrohre (3.1, 3.2) jeweils einen insbesondere metallischen Messrohrkörper (13.1, 13.2) mit einer Wandstärke kleiner 1 Millimeter, insbesondere kleiner 0,7 Millimeter und bevorzugt kleiner 0,25 Millimeter aufweisen.

10. Messgerät nach einem der Ansprüche 6 bis 9,
wobei die Messrohre (3.1, 3.2) jeweils mindestens eine zumindest teilweise planar ausgebildete Anbringfläche (14) aufweisen,
wobei der mindestens eine Magnet (10) an der mindestens einen Anbringfläche (14) angeordnet ist.

11. Messgerät nach einem der Ansprüche 6 bis 10,
wobei der Verbindungskörper (5) insbesondere planare Montageflächen aufweist, zum mechanisch lösbaren Einbau der Messrohranordnung (4) in eine Trägereinheit (16) in einer, insbesondere durch die Montageflächen definierten Position.

12. Messgerät nach einem der Ansprüche 6 bis 11, umfassend:
- ein Schlauch- und/oder Kunststoffrohrsystem (17), vorzugsweise zur Durchflussmessung bei automatisierten industriellen oder labortechnischen Anlagen,
wobei die Messrohranordnung (4) an das Schlauch- und/oder Kunststoffrohrsystem (17) angeschlossen ist und dazu eingerichtet ist die Durchflussgeschwindigkeit und/oder den Volumendurchfluss und/oder den Massedurchfluss des fließfähigen Mediums zu messen.

13. Messgerät nach Anspruch 12,
wobei die Messrohranordnung (4) und das Schlauch- und/oder Kunststoffrohrsystem (17) in einem Behälter (18), insbesondere einem Sterilisationsbeutel angeordnet ist, welcher dazu ausgebildet eine Sterilität der Messrohranordnung (4) und des Schlauch- und/oder Kunststoffrohrsystems (17) bis zur Öffnung des Behälters (18) aufrechtzuerhalten,
wobei das Messrohrsystem (31) mittels Strahlensterilisation, vorzugsweise Gammastrahlensterilisation oder Elektronenstrahlensterilisation, Heißdampfsterilisation und/oder Gassterilisation sterilisiert ist.

14. Messgerät nach Anspruch 12 und/oder 13,
wobei mindestens eine Prozessüberwachungseinheit (19) an das Schlauch- und/oder Kunststoffrohrsystem (17) angeschlossen,
wobei die Prozessüberwachungseinheit (19) einen Druckmesswandler, Temperatursensor, eine Waage, einen pH-Sensor, einen Dichtesensor, ein Durchflussmessgerät zur Ermittlung eines Massedurchflusses, eines Volumendurchflusses und/oder einer Durchflussgeschwindigkeit, einen Durchflussschalter, einen Füllstandssensor, einen Leitfähigkeitssensor, einen Konzentrationssensor, einen Sauerstoffsensor und/oder einen Trübungssensor umfasst.

## Claims

1. Carrier unit (16) of a measuring device (2) for detecting a mass flow rate, a viscosity, a density and/or a variable derived therefrom of a flowable medium, comprising:
- a carrier unit body (22) for mounting a measuring tube arrangement (4) of the measuring device (2), which measuring tube arrangement (4) comprises
-- two measuring tubes (3.1, 3.2), in particular running parallel to each other, for guiding the flowable medium,
wherein the measuring tubes (3.1, 3.2) each have an inlet (20) with an inlet direction and an outlet (21) with an outlet direction,
wherein the measuring tubes (3.1, 3.2) are bent at least once between the inlet (20) and outlet (21);
-- a coupler arrangement (1) for mechanically coupling the two measuring tubes (3.1, 3.2),
wherein the coupler arrangement (1) has at least two coupler elements (6.1, 6.2),
wherein at least one coupler element (6.1) is arranged at the inlet (20),
wherein at least one coupler element (6.2) is arranged at the outlet (21);
-- two magnet arrangements (9.1, 9.2), which are arranged on the measuring tubes (3.1, 3.2),
wherein exactly one magnet arrangement (9.1, 9.2) is arranged on a measuring tube (3.1, 3.2);
wherein the magnet arrangements (9.1, 9.2) each have at least two magnets (10.1, 10.2); and
-- a connecting body (5) which is designed to mechanically and detachably connect the measuring tube arrangement (4) to a carrier unit (16),
wherein the connecting body (5) is connected to the inlet (20) and the outlet (21) of the respective measuring tubes (3.1, 3.2);
wherein the carrier unit body (22) has a receptacle (23) for the measuring tube arrangement (4),
wherein the carrier unit body (22) has at least two opposing side surfaces (24.1, 24.2) which restrict the receptacle (23) transversely to the longitudinal direction of the measuring tube arrangement (4) or to the longitudinal direction of the carrier unit body (22),
wherein the carrier unit body (22) has an end face (35) in which the receptacle (23) is arranged,
wherein the end face (35) is designed as a bearing surface (27) for a connecting body (5) of the measuring tube arrangement (4);
- at least one vibration exciter (7), which is set up to excite the measuring tube arrangement (4) to vibrate,
wherein the at least one vibration exciter (7) is arranged on one of the opposite side surfaces (24.1, 24.2); and
- at least two vibration sensors (8.1, 8.2), which are set up to detect the deflection of the vibrations of the measuring tube arrangement (4),
wherein the vibration sensors (8.1, 8.2) are arranged on the opposite side surfaces (24.1, 24.2),
wherein the vibration sensors (8) are arranged offset to the vibration exciter (7) in the longitudinal direction,
**characterized, in that** a fixing device is arranged on the end face (35), which is set up to produce a force-locking connection between the measuring tube arrangement (4) and the carrier unit body (22),
wherein the force-locking connection is realized via a force effect of the fixing device on the connecting body (5) in the longitudinal direction of the receptacle (23).

2. Carrier unit (16) according to claim 1,
wherein a vibration sensor (8) has two coil devices (25.1, 25.2) which are arranged offset to one another in the longitudinal direction of the carrier unit body (22).

3. Carrier unit (16) according to claim 1 and/or 2,
wherein the vibration exciter (7) and the vibration sensor (8) each have at least one coil device (25),
wherein the coil devices (25) are each arranged in a recess in the carrier unit body (22).

4. Carrier unit (16) according to claim 3,
wherein the coil device (25) comprises at least one printed circuit board coil.

5. Carrier unit (16) according to at least one of claims 1 to 4,
wherein the two opposing side surfaces (24.1, 24.2) each have a guide (28) which extend perpendicular to the longitudinal direction of the receptacle (23) and which are designed to form a positive connection between the connecting body (5) of the measuring tube arrangement (4) and the carrier unit body (22).

6. Measuring device (2) for detecting a mass flow rate, a viscosity, a density and/or a variable derived therefrom of a flowable medium, comprising:
- a measuring tube arrangement (4), which comprises a measuring tube arrangement:
-- two measuring tubes (3.1, 3.2), in particular running parallel to each other, for guiding the flowable medium,
wherein the measuring tubes (3.1, 3.2) each have an inlet (20) with an inlet direction and an outlet (21) with an outlet direction,
wherein the measuring tubes (3.1, 3.2) are bent at least once between the inlet (20) and outlet (21);
-- a coupler arrangement (1) for mechanically coupling the two measuring tubes (3.1, 3.2),
wherein the coupler arrangement (1) has at least two coupler elements (6.1, 6.2),
wherein at least one coupler element (6.1) is arranged at the inlet (20),
wherein at least one coupler element (6.2) is arranged at the outlet (21);
-- two magnet arrangements (9.1, 9.2), which are arranged on the measuring tubes (3.1, 3.2),
wherein exactly one magnet arrangement (9.1, 9.2) is arranged on a measuring tube (3.1, 3.2);
wherein the magnet arrangements (9.1, 9.2) each have at least two magnets (10.1, 10.2); and
-- a connecting body (5) which is designed to mechanically and detachably connect the measuring tube arrangement (4) to a carrier unit (16),
wherein the connecting body (5) is connected to the inlet (20) and the outlet (21) of the respective measuring tubes (3.1, 3.2);
- the carrier unit (16) according to any one of claims 1 to 5,
wherein the measuring tube arrangement (4) is arranged in the receptacle (23) of the carrier unit (16) and is mechanically detachably connected to the carrier unit (16);
- a measuring and/or operating circuit (29),
wherein the measuring and/or operating circuit (29) is arranged to operate the vibration sensor (8) and the vibration exciter (7) and is connected thereto,
wherein the electronic measuring and/or operating circuit (29) is further set up to determine and provide mass flow rate measured values, viscosity measured values and/or density measured values and/or temperature measured values and/or diagnostic measured values and/or values of a variable derived therefrom.

7. Measuring device according to claim 6,
wherein the carrier unit has at least two vibration sensors (8.1, 8.2) offset in the longitudinal direction of the holder, each with a coil device (25),
wherein the measuring and/or operating circuit (29) is set up to determine at which coil device (25) the detected magnetic field is greatest and to use the measured values determined by means of the determined coil device (25) to determine the mass flow rate, the viscosity, the density and/or the quantity of the flowable medium derived therefrom.

8. Measuring device according to any one of claims 6 to 7,
whereby the inlet direction and the outlet direction are oriented in opposite directions.

9. Measuring device according to any one of claims 6 to 8,
wherein the measuring tubes (3.1, 3.2) each have a particularly metallic measuring tube body (13.1, 13.2) with a wall thickness of less than 1 millimeter, particularly less than 0.7 millimeters and preferably less than 0.25 millimeters.

10. Measuring device according to any one of claims 6 to 9,
wherein the measuring tubes (3.1, 3.2) each have at least one at least partially planar mounting surface (14),
wherein the at least one magnet (10) is arranged on the at least one mounting surface (14).

11. A measuring device according to any one of claims 6 to 10,
wherein the connecting body (5) has, in particular, planar mounting surfaces for mechanically detachable installation of the measuring tube arrangement (4) in a carrier unit (16) in a position defined, in particular, by the mounting surfaces.

12. A measuring device according to any one of claims 6 to 11, comprising:
- a hose and/or plastic tube system (17), preferably for flow measurement in automated industrial or laboratory systems,
wherein the measuring tube arrangement (4) is connected to the hose and/or plastic pipe system (17) and is set up to measure the flow rate and/or the volume flow rate and/or the mass flow rate of the flowable medium.

13. Measuring device according to claim 12,
the measuring tube arrangement (4) and the hose and/or plastic tube system (17) being arranged in a container (18), in particular a sterilization bag, which is designed to maintain sterility of the measuring tube arrangement (4) and the hose and/or plastic tube system (17) until the container (18) is opened,
wherein the measuring tube system (31) is sterilized by means of radiation sterilization, preferably gamma ray sterilization or electron beam sterilization, superheated steam sterilization and/or gas sterilization.

14. Measuring device according to claim 12 and/or 13,
at least one process monitoring unit (19) being connected to the hose and/or plastic pipe system (17),
wherein the process monitoring unit (19) comprises a pressure transducer, a temperature sensor, a scale, a pH sensor, a density sensor, a flow meter for determining a mass flow rate, a volume flow rate and/or a flow velocity, a flow switch, a level sensor, a conductivity sensor, a concentration sensor, an oxygen sensor and/or a turbidity sensor.

## Revendications

1. Unité de support (16) d'un appareil de mesure (2) pour détecter un débit massique, une viscosité, une densité et/ou une grandeur qui en est dérivée d'un milieu fluide, comprenant :
- un corps d'unité de support (22) pour fixer un ensemble de tubes de mesure (4) de l'appareil de mesure (2), lequel ensemble de tubes de mesure (4) comprend :
-- deux tubes de mesure (3.1, 3.2) s'étendant en particulier parallèlement l'un à l'autre pour guider le milieu fluide,
les tubes de mesure (3.1, 3.2) présentant chacun une entrée (20) avec une direction d'entrée et une sortie (21) avec une direction de sortie,
les tubes de mesure (3.1, 3.2) étant coudés au moins une fois entre l'entrée (20) et la sortie (21) ;
-- un dispositif de couplage (1) pour coupler mécaniquement les deux tubes de mesure (3.1, 3.2),
l'agencement de coupleur (1) présentant au moins deux éléments de coupleur (6.1, 6.2),
au moins un élément de couplage (6.1) étant disposé à l'entrée (20),
au moins un élément de couplage (6.2) étant disposé sur la sortie (21) ;
-- deux dispositifs magnétiques (9.1, 9.2) qui sont disposés sur les tubes de mesure (3.1, 3.2),
un dispositif magnétique (9.1, 9.2) étant exactement disposé sur un tube de mesure (3.1, 3.2) ;
les agencements d'aimants (9.1, 9.2) présentant chacun au moins deux aimants (10.1, 10.2) ; et
-- un corps de liaison (5) qui est conçu pour relier mécaniquement et de manière amovible l'ensemble de tubes de mesure (4) à une unité de support (16),
le corps de liaison (5) étant relié à l'entrée (20) et à la sortie (21) des tubes de mesure respectifs (3.1, 3.2) ;
le corps d'unité de support (22) présentant un logement (23) pour l'ensemble de tubes de mesure (4),
le corps d'unité de support (22) présentant au moins deux surfaces latérales opposées (24.1, 24.2) qui limitent le logement (23) transversalement à la direction longitudinale de l'ensemble de tubes de mesure (4) ou à la direction longitudinale du corps d'unité de support (22),
dans lequel le corps d'unité de support (22) présente une face frontale (35) dans laquelle le logement (23) est disposé,
la surface frontale (35) étant conçue comme surface d'appui (27) pour un corps de liaison (5) de l'ensemble de tubes de mesure (4) ;
- au moins un excitateur de vibrations (7), qui est conçu pour exciter l'ensemble de tubes de mesure (4) en vibrations,
le au moins un générateur de vibrations (7) étant disposé sur l'une des surfaces latérales opposées (24.1, 24.2) ; et
- au moins deux capteurs de vibrations (8.1, 8.2), qui sont conçus pour détecter la déviation des vibrations de l'ensemble de tubes de mesure (4),
les capteurs de vibrations (8.1, 8.2) étant disposés sur les surfaces latérales opposées (24.1, 24.2),
les capteurs de vibrations (8) étant disposés de manière décalée par rapport à l'excitateur de vibrations (7) dans la direction longitudinale,
**caractérisé en ce que** un dispositif de fixation est disposé sur la face frontale (35), lequel est conçu pour établir une liaison par adhérence entre l'agencement de tube de mesure (4) et le corps d'unité de support (22),
la liaison par adhérence étant réalisée par une action de force du dispositif de fixation sur le corps de liaison (5) dans la direction longitudinale du logement (23).

2. Unité de support (16) selon la revendication 1,
dans lequel un capteur de vibrations (8) présente deux dispositifs de bobines (25.1, 25.2) qui sont disposés de manière décalée l'un par rapport à l'autre dans la direction longitudinale du corps d'unité de support (22).

3. Unité de support (16) selon la revendication 1 et/ou 2,
l'excitateur de vibrations (7) et le capteur de vibrations (8) présentant chacun au moins un dispositif à bobine (25),
dans lequel les dispositifs de bobine (25) sont chacun disposés dans un renfoncement dans le corps d'unité de support (22).

4. Unité de support (16) selon la revendication 3,
dans lequel les dispositifs de bobine (25) comprennent au moins une bobine de carte de circuit imprimé.

5. Unité de support (16) selon au moins l'une des revendications 1 à 4,
les deux surfaces latérales opposées (24.1, 24.2) présentant chacune un guidage (28) qui s'étend perpendiculairement à la direction longitudinale du logement (23) et qui est conçu pour former une liaison par complémentarité de forme entre le corps de liaison (5) de l'ensemble de tubes de mesure (4) et le corps d'unité de support (22).

6. Appareil de mesure (2) pour détecter un débit massique, une viscosité, une densité et/ou une grandeur qui en est dérivée d'un milieu fluide, comprenant :
- un ensemble de tubes de mesure (4), lequel ensemble de tubes de mesure comprend
-- deux tubes de mesure (3.1, 3.2) s'étendant en particulier parallèlement l'un à l'autre pour guider le milieu fluide,
les tubes de mesure (3.1, 3.2) présentant chacun une entrée (20) avec une direction d'entrée et une sortie (21) avec une direction de sortie,
les tubes de mesure (3.1, 3.2) étant coudés au moins une fois entre l'entrée (20) et la sortie (21) ;
-- un dispositif de couplage (1) pour coupler mécaniquement les deux tubes de mesure (3.1, 3.2),
l'agencement de coupleur (1) présentant au moins deux éléments de coupleur (6.1, 6.2),
au moins un élément de couplage (6.1) étant disposé à l'entrée (20),
au moins un élément de couplage (6.2) étant disposé sur la sortie (21) ;
-- deux dispositifs magnétiques (9.1, 9.2) qui sont disposés sur les tubes de mesure (3.1, 3.2),
un dispositif magnétique (9.1, 9.2) étant exactement disposé sur un tube de mesure (3.1, 3.2) ;
les agencements d'aimants (9.1, 9.2) présentant chacun au moins deux aimants (10.1, 10.2) ; et
-- un corps de liaison (5) qui est conçu pour relier mécaniquement et de manière amovible l'ensemble de tubes de mesure (4) à une unité de support (16),
le corps de liaison (5) étant relié à l'entrée (20) et à la sortie (21) des tubes de mesure respectifs (3.1, 3.2) ;
- l'unité de support (16) selon l'une quelconque des revendications 1 à 5,
l'ensemble de tubes de mesure (4) étant disposé dans le logement (23) de l'unité de support (16) et étant relié mécaniquement de manière amovible à l'unité de support (16) ;
- un circuit de mesure et/ou de fonctionnement (29),
dans lequel le circuit de mesure et/ou de fonctionnement (29) est adapté pour faire fonctionner le capteur de vibrations (8) et l'excitateur de vibrations (7), et est connecté à ceux-ci,
le circuit électronique de mesure et/ou de fonctionnement (29) étant en outre conçu pour déterminer et fournir des valeurs de mesure de débit massique, des valeurs de viscosité et/ou des valeurs de mesure de densité et/ou des valeurs de mesure de température et/ou des valeurs de mesure de diagnostic et/ou des valeurs d'une grandeur qui en est dérivée.

7. Appareil de mesure selon la revendication 6,
l'unité de support présentant au moins deux capteurs de vibrations (8.1, 8.2) décalés dans le sens longitudinal du logement, avec chacun un dispositif à bobine (25),
le circuit de mesure et/ou de fonctionnement (29) étant conçu pour déterminer sur quel dispositif à bobine (25) le champ magnétique détecté est le plus grand et pour utiliser les valeurs de mesure obtenues au moyen du dispositif à bobine (25) déterminé pour la détermination du débit massique, de la viscosité, de la densité et/ou de la grandeur du milieu fluide qui en est dérivée.

8. Appareil de mesure selon l'une quelconque des revendications 6 à 7,
le sens d'entrée et le sens de sortie étant orientés de manière opposée.

9. Appareil de mesure selon l'une quelconque des revendications 6 à 8,
les tubes de mesure (3.1, 3.2) présentant chacun un corps de tube de mesure (13.1, 13.2) en particulier métallique avec une épaisseur de paroi inférieure à 1 millimètre, en particulier inférieure à 0,7 millimètre et de préférence inférieure à 0,25 millimètre.

10. Appareil de mesure selon l'une quelconque des revendications 6 à 9,
les tubes de mesure (3.1, 3.2) présentant chacun au moins une surface de montage (14) réalisée au moins partiellement de manière plane,
dans lequel ledit au moins un aimant (10) est disposé sur ladite au moins une surface de montage (14).

11. Appareil de mesure selon l'une quelconque des revendications 6 à 10,
le corps de liaison (5) présentant en particulier des surfaces de montage planes, pour le montage mécaniquement amovible de l'ensemble de tubes de mesure (4) dans une unité de support (16) dans une position définie en particulier par les surfaces de montage.

12. Appareil de mesure selon l'une quelconque des revendications 6 à 11, comprenant :
- un système de tuyaux flexibles et/ou de tuyaux en plastique (17), de préférence pour la mesure de débit dans des installations industrielles ou de laboratoire automatisées,
dans lequel l'ensemble de tubes de mesure (4) est raccordé au système de tuyaux flexibles et/ou de tuyaux en plastique (17) et est conçu pour mesurer la vitesse d'écoulement et/ou le débit volumétrique et/ou le débit massique du milieu fluide.

13. Appareil de mesure selon la revendication 12,
l'ensemble de tubes de mesure (4) et le système de tubes flexibles et/ou en plastique (17) étant disposés dans un récipient (18), en particulier un sachet de stérilisation, qui est conçu pour maintenir une stérilité de l'ensemble de tubes de mesure (4) et du système de tubes flexibles et/ou en plastique (17) jusqu'à l'ouverture du récipient (18),
dans lequel le système de tube de mesure (31) est stérilisé au moyen d'une stérilisation par rayonnement, de préférence une stérilisation par rayons gamma ou par faisceau d'électrons, une stérilisation à la vapeur chaude et/ou une stérilisation au gaz.

14. Appareil de mesure selon la revendication 12 et/ou 13,
au moins une unité de surveillance de processus (19) étant raccordée au système de tuyaux flexibles et/ou de tuyaux en plastique (17),
dans lequel l'unité de surveillance de processus (19) comprend un transducteur de pression, un capteur de température, une balance, un capteur de pH, un capteur de densité, un débitmètre pour déterminer un débit massique, un débit volumique et/ou une vitesse de débit, un commutateur de débit, un capteur de niveau, un capteur de conductivité, un capteur de concentration, un capteur d'oxygène et/ou un capteur de turbidité.
